# FASCICULE DE BREVET EUROPEEN

(11) **EP 4 261 000 B1**
(45) Date de publication et mention de la délivrance du brevet: **30.10.2024**
(21) Numéro de dépôt: 23167447.4
(22) Date de dépôt: 11.04.2023
(51) Int. Cl.: B29C 43/36, B29C 43/42, B29C 33/30, B29C 33/48, B29C 70/46, B29K 79/00, B29K 81/00, B29K 101/12, B29K 105/08, B29K 271/00, B29L 31/30

(54) **PROCÉDÉ DE PRESSAGE**
PRESSVERFAHREN
PRESSING METHOD

(30) Priorité: 11.04.2022 FR 2203323
(43) Date de publication de la demande: 18.10.2023
(73) Titulaire: Daher Aerospace, 94310 Orly (FR)
(72) Inventeur: GUERNIC, Antoine, 85660 Saint Philbert de Bouaine (FR); JOUTEUX, Rémi, 44200 COUERON (FR)
(74) Mandataire: Hamann, Jean-Christophe

(56) Documents cités:
- EP-A1- 1 543 942
- DE-C- 742 682
- FR-A1- 2 717 735

## Description

### Domaine technique

L'invention appartient au domaine des outillages, plus particulièrement au domaine des outillages d'estampage utilisés pour la mise en forme de matériaux composite à matrice thermoplastique.

Plus précisément, l'invention concerne un outillage d'estampage comprenant des mobilités et spécifiquement des mobilités multiples.

### Technique antérieure

L'estampage est une technique de mise en forme consistant à déformer un flan entre un poinçon et une matrice de formes complémentaires séparées par un entrefer correspondant à l'épaisseur de la pièce réalisée.

Cette mise en forme s'effectue par un mouvement de translation relatif du poinçon tendant à le rapprocher de la matrice, puis à pénétrer dans celle-ci obligeant le flan, couvrant initialement l'entrée de l'empreinte de la matrice, et pris dans l'entrefer entre la matrice et le poinçon, à se déformer de sorte à reproduire les formes du poinçon et de la matrice lors de la pénétration dudit poinçon dans ladite matrice.

Généralement, l'ensemble est installé sur une presse, la matrice étant fixe et le poinçon étant fixé au coulisseau de la presse, la frappe s'effectuant selon une translation verticale.

Un outillage est dit « à mobilités » lorsque celui-ci comprend des éléments qui se déplacent de manière différente du mouvement de frappe. Ces éléments sont situés sur le poinçon ou la matrice, mais de manière générale sont plutôt situés sur le poinçon.

Selon des exemples de mobilité non limitatifs, ces éléments se déplacent au cours de la frappe dans une direction comprenant une composante perpendiculaire à la direction de la frappe, ou dans la direction de la frappe mais à une vitesse différente de la vitesse de frappe, voire en sens opposé au sens de la frappe.

Ces mobilités peuvent être pilotées par des effecteurs électriques, pneumatiques ou hydrauliques ou être générées par des liaisons mécaniques appropriées entraînées par le mouvement de frappe lui-même.

Le document EP 2 243 617 décrit un exemple d'un tel outillage à mobilité pour l'estampage d'un flan constitué d'un composite à matrice thermoplastique, et comprenant un élément mobile selon une direction perpendiculaire à la direction de frappe de sorte à réaliser un pliage.

Un outillage à mobilités est particulièrement utile pour la réalisation par estampage d'une pièce à bords tombés lorsque le flan composite comporte un renfort fibreux continu avec des fibres ne présentant pas ou très peu de plasticité tels que des fibres de verre ou de carbone.

En effet, la déformation d'un tel flan se produit par des glissements interlaminaires et interfibres c'est-à-dire par des modifications locales de la distance entre les fibres dans des limites acceptables.

Ainsi, pour déformer un tel flan celui-ci doit être porté à une température suffisante, généralement égale ou supérieure à la température de fusion du polymère constituant la matrice du composite, de sorte que ce polymère n'oppose plus, ou très peu, de résistance aux mouvements interlaminaires des renforts et autorise leur glissement relatif.

En termes simplifiés, l'estampage d'un flan composite à matrice thermoplastique, renforcé par des fibres continues ne présentant pas ou très peu de plasticité, implique de placer ce flan, par chauffage, dans un état où celui-ci perd une bonne part de sa cohésion. Cette cohésion est restaurée en fin d'estampage par le compactage du flan entre les parois du poinçon et de la matrice, de sorte que lorsque la pièce finale comprend au moins deux bords tombés, une mobilité est nécessaire pour obtenir à la fois le formage du flan puis le compactage desdits bords tombés.

La phase de re-compactage en fin d'estampage est essentielle car elle doit à la fois supprimer les vides dans la stratification et éviter les essorages, un compactage trop sévère tendant à éjecter la résine d'entre les fibres. La capacité de contrôler des épaisseurs dans un outillage à mobilités est par suite essentielle.

Le document EP 1 543 942 décrit un autre exemple d'outillage à mobilités pour l'estampage d'un flan composite à matrice thermoplastique et renfort fibreux continu, notamment pour la réalisation d'une pièce à bords tombés en forme de demi-boîte.

Ce dispositif de l'art antérieur comprend un poinçon, pourvu de pièces latérales mobiles liées au poinçon par des liaisons élastiques, lesdites pièces latérales sont aptes à s'écarter d'une partie centrale dudit poinçon, ladite partie centrale comprenant une partie en forme de coin liée au poinçon et apte à se déplacer verticalement relativement aux pièces latérales lorsque, au cours de l'estampage, le poinçon atteint le fond de la matrice, ce déplacement relatif de la partie en forme de coin provoquant l'écartement des pièces latérales, rendant ainsi possible le compactage des bords tombés de la pièce en forme de demi-boîte.

La cinématique de ce dispositif de l'art antérieur fait que les parties latérales se déplacent selon un mouvement de pivotement sous l'effet de l'enfoncement de la pièce en forme de coin. Le point de pivotement étant proche du fond de la matrice, d'une part la pression de compactage sur les bords n'est pas uniforme, et de plus, la cinématique de ce dispositif ne permet pas la réalisation de pièce à bords tombés présentant un pincement, c'est-à-dire pour lesquelles la distance entre deux bords tombés, mesurée parallèlement au fond diminue lorsque l'on s'éloigne dudit fond.

Or de telles pièces, en forme de demi-boîte avec des bords tombés en pincement, sont notamment rencontrées en aéronautique, par exemple pour des nervures de voilure.

De plus, le mécanisme de mobilité ne permet pas un réglage précis du compactage de la pièce obtenue par ces mobilités ainsi que l'appairage du poinçon avec la matrice.

Le document FR2717735 décrit un outillage comprenant des moyens de pressage latéraux pour consolider en forme une pièce en forme de boîte. Cet outillage n'est pas adapté à l'estampage d'un flan thermoplastique composite consolidé.

De la même manière le document DE741682 décrit un outillage pour la consolidation en forme dont les solutions techniques ne sont pas applicables à l'estampage d'un flan composite consolidé

### Résumé de l'invention

Le procédé selon la revendication 1 est destiné à résoudre les problèmes décrits ci-dessus. Une forme de réalisation préférée est décrite dans la revendication dépendante 2.

Ce procédé permet de fabriquer en série et de manière économique des pièces structurelles composites de haute qualité et de haute performance structurelle vis-à-vis de leur masse, notamment des nervures de voilures d'aéronef présentant des bords tombés en pincement.

### Brève description des dessins

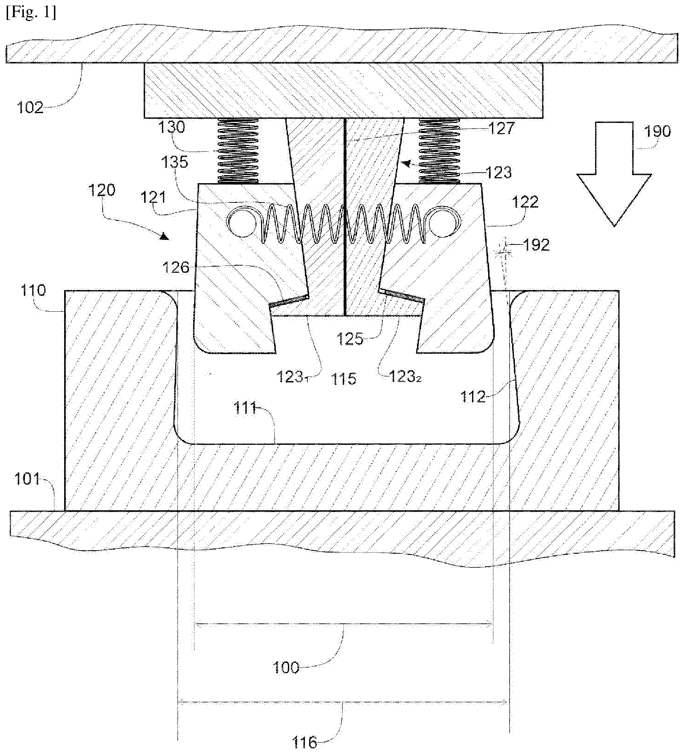

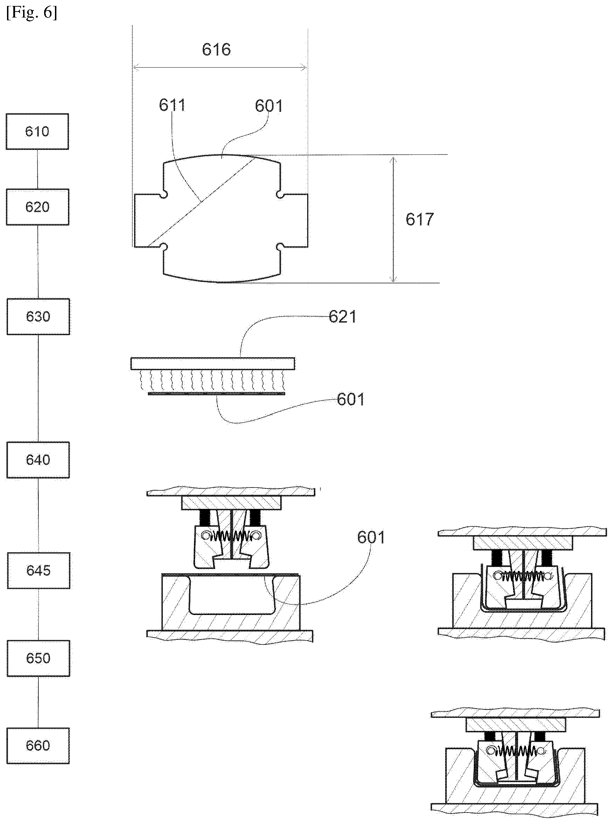

L'invention est mise en oeuvre selon les modes de réalisations préférés exposés ci-après, nullement limitatifs, et en référence aux [Fig.1] à [Fig.6] dans lesquelles :
**Fig.1**
   [Fig.1] représente, selon une vue schématique en coupe simplifiée, un exemple de réalisation de l'outillage en début de course d'estampage ;
**Fig.2**

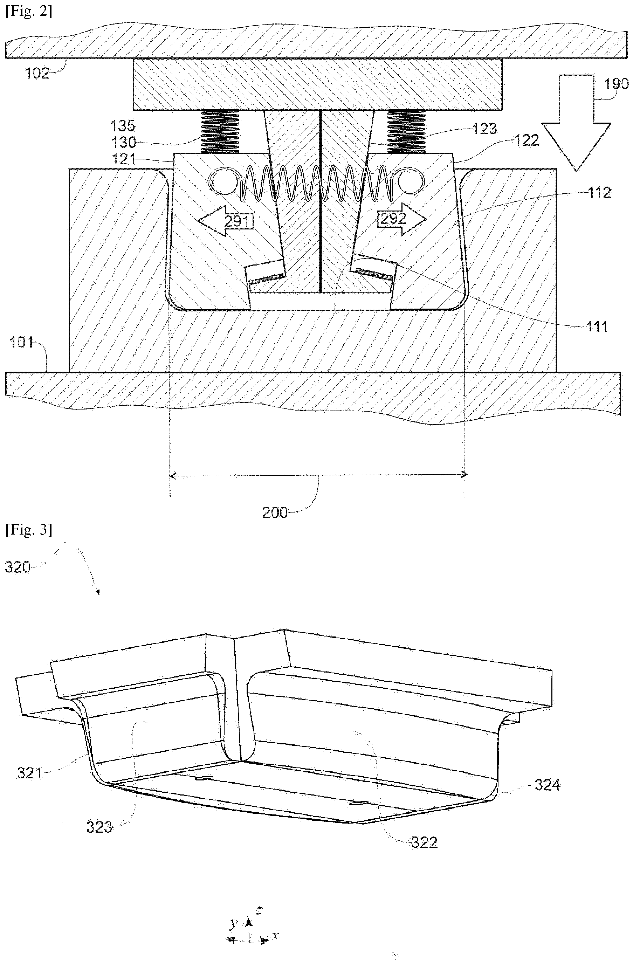

   [Fig.2] montre selon la même coupe que la [Fig.1], l'outillage en fin de course d'estampage ;
**Fig.3**
   [Fig.3] est une vue en perspective d'un exemple de réalisation d'un poinçon comprenant des parties latérales mobiles selon deux directions sécantes ;
**Fig.4**

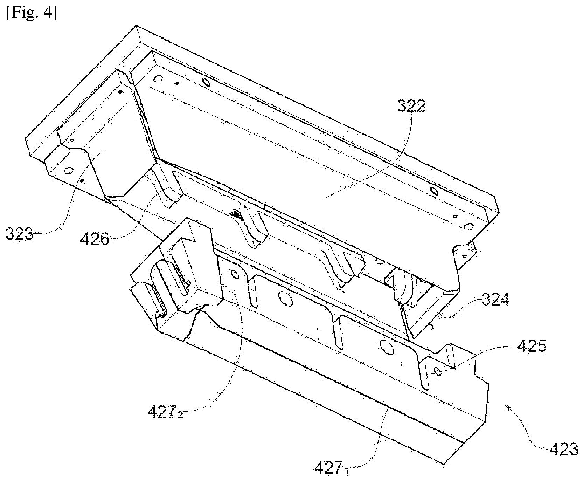

   [Fig.4] montre le poinçon de la [Fig.3] selon une vue en perspective partielle et en éclaté ;
**Fig.5**

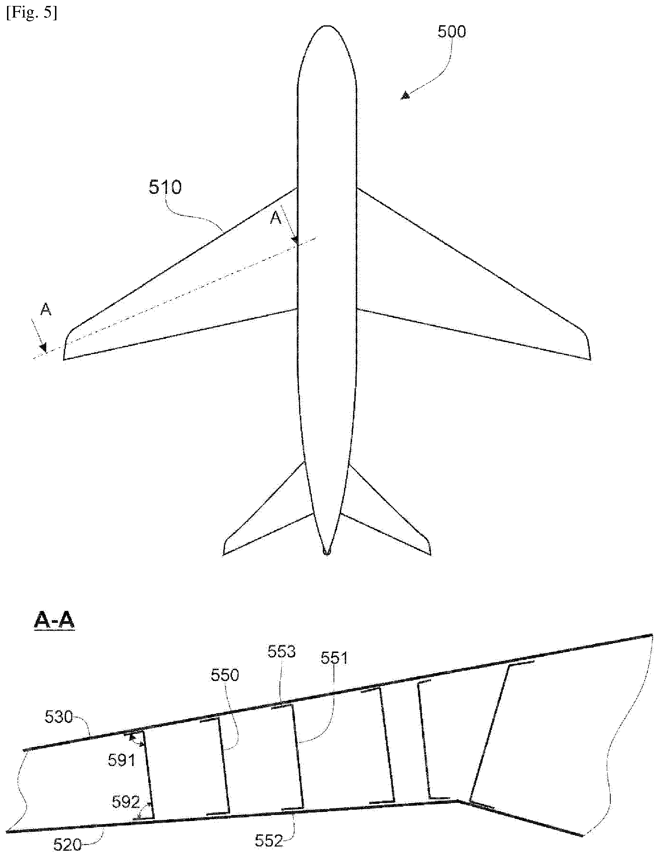

   [Fig.5] représente schématiquement la section d'une voilure d'un aéronef selon une coupe définie sur cette même figure ;
**Fig.6**
   [Fig.6] montre un organigramme d'un exemple de réalisation d'un procédé mettant en oeuvre l'outillage.

### Description des modes de réalisation

Dans tout le texte, le terme « flan » désigne une ébauche plane rigide, détourée selon un contour approprié et destinée à être déformée pour obtenir une pièce tridimensionnelle.

Dans [Fig.1] à [Fig.4], l'outillage est représenté sans la pièce réalisée.

[Fig.1], selon un exemple de réalisation, l'outillage comprend une presse (non entièrement représentée) comprenant un plateau fixe (101) et un plateau mobile (102). Le plateau mobile est susceptible d'être déplacé vers le plateau fixe, par exemple au moyen d'un vérin hydraulique, selon une direction de frappe (190), de sorte à réaliser une opération d'estampage.

Selon cet exemple de réalisation, une matrice de formage (110) comprenant une empreinte (115), est fixée au plateau fixe (101) par des moyens appropriés. L'empreinte est délimitée par un fond (111) et des parois latérales (112). Selon cet exemple de réalisation les parois latérales (112) de l'empreinte présentent un pincement, selon un angle (192) mesuré par rapport à la direction de frappe (190), de sorte que la largeur de l'empreinte est plus importante au fond (111) qu'à l'entrée de l'empreinte sur la face opposée de la matrice de formage.

Un poinçon (120) est fixé au plateau mobile (102) et se déplace avec celui-ci. Le poinçon comprend une partie centrale (123) en forme de coin insérée entre des parties latérales (121, 122) mobiles.

Selon cet exemple de réalisation, la partie centrale comprend à son extrémité, entre les parties latérales mobiles (121, 122), une partie en épaulement (125) formant butée.

Les deux parties latérales mobiles (121, 122) sont en liaison glissière sur la partie centrale (123) en forme de coin, et sont poussées contre l'épaulement (125) formant butée par des ressorts de compression (130) agissant entre le lesdites parties latérales mobiles (121, 122) et le plateau fixe (102) de la presse.

La position de la butée réalisée par l'épaulement est avantageusement réglable par des moyens appropriés tels que des cales pelables (126).

Selon cet exemple de réalisation, un ressort de traction (135) tend à plaquer les parties latérales mobiles (121, 122) au contact de la partie centrale (123) en forme de coin.

Les formes du poinçon (120) et de l'empreinte (115) sont appairées, de sorte que le poinçon est apte à être insérée dans l'empreinte en laissant entre le poinçon et l'empreinte un entrefer correspondant à l'épaisseur de la pièce à réaliser (non représentée).

[Fig.2], le poinçon (120) descendant dans l'empreinte (115), lorsque les extrémités des pièces latérales mobiles (121, 122) entrent en contact avec le fond (111) de l'empreinte (115), directement sur cette figure mais en pratique avec le fond de la pièce à réaliser, celle-ci étant comprise entre le fond de l'empreinte et l'extrémité du poinçon, si le mouvement de frappe (190) est poursuivi, alors la partie centrale (123) du poinçon se déplace dans la direction de frappe (190) entre les pièces latérales mobiles (121, 122) et relativement à celles-ci. Compte tenu de la forme en coin de la liaison glissière entre les pièces latérales mobiles (121, 122) et la partie centrale (123) du poinçon, ce déplacement relatif produit une expansion du poinçon, les pièces latérales mobiles se déplaçant dans des directions (291, 292) perpendiculaires à la direction de frappe (190) et se rapprochant des parois latérales (112) de l'empreinte, alors que les ressorts (130) de compression agissant sur les parties latérales mobiles dans la direction de la frappe se compriment.

Ainsi, l'utilisation de cet outillage permet de comprimer une épaisseur de matière se trouvant entre le poinçon et l'empreinte, et plus particulièrement entre les pièces latérales mobiles et les parois latérales de l'empreinte, y compris dans des zones de raccordement entre les parois latérales (112) et le fond (111) de l'empreinte. Cette aptitude de l'outillage à réaliser cette compression latérale permet l'estampage puis la consolidation d'un flan composite à matrice thermoplastique et renfort fibreux continu, préalablement porté à une température proche de la température de fusion du polymère constituant sa matrice.

En revenant à la [Fig.1], sur cette figure les parties latérales mobiles (121, 122) du poinçon sont rapprochées l'une de l'autre de sorte que la largeur (100) du poinçon est inférieure à la largeur d'entrée (116) de l'ouverture de l'empreinte et que celui-ci peut pénétrer dans l'empreinte bien que les parois latérales de l'empreinte soient pincées.

[Fig.2], la pénétration de la partie centrale (123) du poinçon entre ses parties latérales mobiles (121, 122) entraîne une expansion de la largeur du poinçon de sorte que sa largeur (200), sous l'effet de cette expansion peut devenir supérieure à la largeur d'entrée de l'empreinte.

Ainsi, l'outillage est adapté à l'estampage d'une pièce comprenant des bords tombés présentant un angle pincement (192) élevé, jusqu'à 30°.

À la fin d'une opération d'estampage, le plateau mobile (102) est remonté de sorte à l'éloigner du plateau fixe (101). Les ressorts de compression (130) continuent de presser les parties latérales mobiles (121, 122) du poinçon vers l'empreinte, alors que le ressort de traction (135) plaque les parties latérales mobiles contre la partie centrale (123) du poinçon, de sorte que le déplacement relatif de la partie centrale (123) en forme de coin provoque le resserrement des parties latérales mobiles et le rétreint du poinçon qui peut être sorti de l'empreinte.

[Fig.2], la partie centrale en forme de coin est représentée avec des pentes symétriques de sorte que pour un déplacement relatif donné selon la direction de frappe (190) de la partie centrale (123), les parties latérales mobiles (121, 122) se déplacent latéralement d'une même course (291, 292). L'homme du métier comprend que la partie centrale (123) peut comporter des pentes dissymétriques de sorte qu'un déplacement relatif donné de la partie centrale (123) selon la direction de frappe (190) conduise à des courses (291, 292) différentes de la partie mobile à droite (122) et de la partie mobile à gauche (121) sur la figure, afin de s'adapter à une géométrie de pièce spécifique, notamment des pincements des bords tombés différents de chaque côté.

En revenant à la [Fig.1], la pièce centrale (123) est avantageusement constituée de deux parties (123₁, 123₂) et comprend des moyens (127), par exemple des cales pelables, entre lesdites deux parties de sorte à régler la largeur de la partie centrale (123) et ainsi définir de manière précise l'entrefer entre les parties latérales mobiles et les parois latérales de l'empreinte en fin de course du poinçon ainsi que l'appairage précis du poinçon avec l'empreinte.

[Fig.3], selon un exemple de réalisation le poinçon (320) comprend des parties latérales mobiles (321, 322, 323, 324) aptes à réaliser une expansion selon des plans sécants. Ainsi, en référence au repère x, y, z [Fig.3], lors de la descente du poinçon, 2 des parties latérales mobiles (321, 322) réalisent une expansion du poinçon selon une direction y dans un plan zy et les deux autres parties latérales mobiles (323, 324) réalisent une expansion du poinçon selon une direction *x* dans un plan *xz.*

Toutes les caractéristiques et modes de réalisation développés plus haut s'appliquent tant aux parties latérales mobiles (321, 322) dans un plan qu'aux parties latérales mobiles (323, 324) dans un autre plan.

L'homme du métier comprend que les plans sécants dans lesquels les différentes expansions sont réalisées ne sont pas nécessairement perpendiculaires d'une part, et d'autre part que ce mode de réalisation n'est pas limité à une combinaison d'expansions selon deux plans sécants uniquement mais que les mobilités peuvent agir dans une pluralité de plans sécants.

[Fig.4], la partie centrale (423) de l'outillage peut comprendre un assemblage de plusieurs parties, et des moyens (427₁, 427₂) entre ces parties pour un réglage précis des entrefers entre le poinçon et les parois latérales de l'empreinte.

Selon cet exemple de réalisation, la partie centrale (423) et les parties latérales mobiles (321, 322, 323, 324) sont liées par des rainures (425) pratiquées dans la partie centrale (423) qui coopèrent avec des tenons (426) sur les faces internes des parties latérales mobiles. Ces assemblages assurent l'arrêt en translation des parties latérales mobiles perpendiculairement à leur direction d'expansion respectives mais aussi les fonctions techniques de l'épaulement (125) formant butée.

La sélection des matériaux constituant les diverses parties de l'outillage est fonction de la nature des matériaux constituant le flan mis en forme et notamment de la température d'estampage et des caractéristiques de dilatation thermique de ces matériaux.

À titre d'exemples non limitatifs, les diverses parties sont réalisées dans un acier à outillage au carbone comprenant du chrome du magnésium et du molybdène, ou encore dans un acier de type INVAR^{®} comprenant du fer et du nickel.

La capacité de l'outillage à réaliser par estampage des pièces composites à matrice thermoplastique comprenant des bords tombés en pincement, est avantageusement utilisée pour intégrer des fonctions sur certaines pièces qui peuvent ainsi être réalisées d'un seul tenant alors que, selon les techniques de l'art antérieur, celles-ci nécessitaient l'assemblage de plusieurs composants. Réduire le nombre de composants et le nombre d'assemblages permet de réduire les coûts de fabrication et d'alléger les éléments structuraux.

À titre d'exemple non limitatif, [Fig.5], la voilure (510) d'un aéronef (500), comprend une pluralité de nervures (550) s'étendant entre l'intrados (520) et l'extrados (530).

Ces nervures (ou *ribs*) se présentent comme des pièces à bords tombés, comportant une âme (551) et des semelles (552, 553) lesdites semelles étant des bords tombés par rapport à l'âme et assurant la jonction desdites nervures avec les peaux de la voilure, côtés intrados et extrados.

Du fait de la section de l'aile qui s'affine vers son extrémité et s'élargit vers sa connexion avec le fuselage, certaines de ces nervures, pour pouvoir être connectées aux peaux, doivent présenter des bords tombés avec un pincement, c'est-à-dire qu'au moins un des angles (591, 592) entre l'âme (551) et les semelles (552, 552) de la nervure est inférieur à 90°.

Selon l'art antérieur ces nervures sont alors réalisées en rapportant un composant spécifique en lieu et place d'au moins un des bords tombés.

La mise en oeuvre de l'outillage permet de réaliser ces pièces d'un seul tenant, c'est-à-dire sans pièce rapportée, directement par estampage.

Ainsi, [Fig.6], selon un mode de réalisation, un procédé met en oeuvre l'outillage pour la réalisation par estampage d'un flan composite à matrice polymère thermoplastique et renfort fibreux continu.

La pièce finale à obtenir est par exemple une nervure de voilure, comprenant une âme et au moins deux semelles en bords tombés, au moins une desdites semelles s'étendant selon une direction formant un angle inférieur à 90° par rapport à l'âme.

Selon une étape (610) de réglage, le poinçon est réglé notamment au moyen des cales pelables entre les deux parties de la partie centrale de sorte que l'entrefer entre l'empreinte et les diverses parties du poinçon en fin de course de frappe de la presse soit adapté aux épaisseurs visées de la pièce.

Selon une étape d'obtention (620), un flan composite (601) destiné à être formé par le procédé est obtenu selon des techniques connues de l'art antérieur. Le flan composite comprend une matrice polymère thermoplastique caractérisée notamment par une température de fusion, et si pertinent par une température de cristallisation ou une température transition vitreuse selon la nature du polymère. À titre d'exemples non limitatifs, pour des applications aéronautiques, ledit polymère est un polyétheré-thercétone (PEEK), un polyéthercétone-cétone (PEKK), un polyétherimide (PEI) ou un polysulphure de phénylène (PPS),

Le flan est renforcé par des fibres de renfort continues (611), c'est-à-dire s'étendant continûment entre deux bords du flan (601), de verre, de carbone ou d'aramide, seules ou en combinaison, sans que ces exemples ne soient limitatifs. Ces fibres ont la particularité de ne pas présenter de plasticité aux températures d'utilisation de la pièce ainsi qu'aux températures de mise en oeuvre du procédé.

Le flan est obtenu par des techniques connues de l'art antérieur. Il est par exemple obtenu par découpage au jet d'eau haute pression dans une plaque composite pré-consolidée, ou par un procédé tel que décrit dans le document EP 3 096 940.

Le flan ainsi obtenu est plan et rigide.

Selon une étape de chauffage (630), le plan est chauffé à une température égale ou supérieure à la température de fusion de la matrice polymère. À cette fin et selon un exemple de mise en oeuvre, le plan est transporté sur une feuille polyimide ou dans un outillage tel que décrit dans le document EP 3 065 931 sous un panneau rayonnant infrarouge (621) et chauffé à l'air libre jusqu'à cette température.

Selon une étape d'estampage (640) le flan (601) chaud est placé sur la matrice de formage alors que le poinçon est éloigné de celle-ci.

Une largeur du flan (616, 617) est, selon toutes les directions, supérieure à la largeur de l'ouverture (116) de l'empreinte, de sorte que le flan (601)repose sur les bords de la matrice de formage et ne peut épouser les formes de l'empreinte que s'il est poussé dans l'empreinte et déformé par le poinçon.

Puis, le poinçon est déplacé vers la matrice de formage de sorte à déformer le flan. Cette déformation est possible par le glissement relatif des fibres continues du composite dans la matrice polymère chauffée à une température où elle n'oppose quasiment plus de résistance à ce déplacement relatif, le flan ayant été déconsolidé au cours de l'étape de chauffage et également décompacté au cours de cette première phase d'estampage.

Au cours d'une étape de compactage (645), qui en pratiquent suit de manière continue la phase d'estampage, lorsque la course de frappe vient coincer le fond de la pièce, qui constituera l'âme, entre l'extrémité du poinçon et le fond de l'empreinte sous une certaine pression, laquelle dépend des caractéristiques des ressorts de compression entre le poinçon et le plateau mobile (130 [Fig.1]) ; la poursuite de la course du plateau mobile de la presse produit l'expansion latérale du poinçon ce qui a pour effet de compacter les bords tombés entre les parois latérales de l'empreinte et les parois latérales mobiles du poinçon.

Le compactage élimine les vides entre les fibres assurant une distribution uniforme des fibres et de la matrice dans toute épaisseur de la pièce.

Au cours d'une étape de consolidation (650) la pièce est refroidie en maintenant la pression dans l'outillage, c'est-à-dire sans déplacer le plateau mobile de la presse par rapport à l'étape précédente, jusqu'à ce que la pièce atteigne une température appropriée à son démoulage. À cette fin, selon des exemples de réalisation non représentés, la matrice de formage peut comprendre des moyens de chauffage et de refroidissement pour un meilleur contrôle des températures au cours des différentes phases.

Au cours d'une étape de démoulage (660) le plateau mobile est éloigné de la matrice de formage et la pièce est démoulée.

La pièce est ensuite détourée par jet d'eau ou par fraisage de sorte à éliminer les bords non compactés.

La description ci-avant et les exemples de réalisation montrent que l'invention atteint le but visé et permet notamment, par estampage d'un flan composite à renfort fibreux continu, la réalisation d'une pièce à bords tombés en pincement, tout en offrant un contrôle précis des épaisseurs tant du fond que des bords tombés. Bien entendu, l'outillage et le procédé décrits, sont également adaptés à la réalisation d'une pièce à bords tombés sans pincement voir allant en s'évasant. Dans ce dernier cas, la présence de mobilités offre un contrôle accru des épaisseurs tant de l'âme que des bords tombés, et par suite une meilleure qualité de pièce en termes de santé matière.

## Revendications

1. Procédé pour la réalisation d'une pièce composite comprenant une matrice polymère thermoplastique et comprenant une âme (551) et au moins deux bords tombés (552, 553), au moins l'un des bords tombés étant orienté par rapport à l'âme d'un angle (591, 592) inférieur à 90°, le procédé mettant en oeuvre un outillage comprenant :
- une matrice comprenant une empreinte (110) comprenant une ouverture, une largeur d'entée (116), un fond (111) et des parois latérales (112)
- un poinçon (120) comprenant une partie centrale (123) et au moins deux parties mobiles latérales (121, 122, 321, 322, 323, 324) en liaison glissière avec la partie centrale (123) comprenant une extrémité entre les parties latérales et formant un coin entre lesdites parties latérales, des moyens de pression (135) entre les parties mobiles latérales et la partie centrale ;
- des moyens pour déplacer le poinçon (120) relativement à la matrice selon une direction de frappe (190) ;
- configuré pour qu'une largeur du poinçon (100) soit inférieure à la largeur d'entrée (116) de l'ouverture de l'empreinte et dans lequel les parties latérales étant arrêtées en translation selon la direction de frappe (190) contre le fond (111) de la matrice, le déplacement de la partie centrale (123) dans cette même direction relativement aux parties latérales, provoque un déplacement relatif des parties latérales selon des directions (291, 292) d'expansion latérale du poinçon, une largeur (200) du poinçon en expansion étant égale ou supérieure à la larguer d'entrée (116) de l'ouverture de la matrice ;
- la partie centrale (123, 423) en forme de coin comprenant deux parties (123₁, 123₂) et entre ces deux parties des moyens (127, 427₁, 427₂) pour régler une largeur de la partie centrale selon les directions d'expansion latérale ;
le procédé comprenant des étapes consistant à :
- appairer (610) le poinçon et la matrice en réglant les moyens (127, 427₁, 427₂) pour régler la largeur de la partie centrale du poinçon en fonction des épaisseurs de l'âme et des bords tombés de la pièce;
- obtenir (620) un flan composite dont une largeur (616, 617) est supérieure à la largeur (116) de l'ouverture de la matrice ;
- chauffer (630) le flan composite à une température égale ou supérieure à une température de fusion de la matrice polymère thermoplastique ;
- positionner le flan composite au-dessus de la matrice de l'outillage et estamper (640) le flan composite (601) entre le poinçon et l'empreinte selon une course dans la direction de frappe (190) jusqu'à ce que les parties latérales atteignent une distance du fond de l'empreinte égale à une épaisseur de l'âme ;
- poursuivre la course du poinçon pour déplacer les parties latérales jusqu'à des distances des parois latérales de l'empreinte égales à des épaisseurs des bords tombés et compacter (645) la pièce ;
- refroidir la pièce sous pression entre le poinçon et l'empreinte jusqu'à une température inférieure à la température de fusion de la matrice polymère pour consolider (650) la pièce ;
- éloigner le poinçon de la matrice et démouler (660) la pièce.

2. Procédé selon la revendication 1, dans lequel la pièce comprend 4 bords tombés au moins deux bords tombés étant orientés par rapport à l'âme d'un angle (591, 592) inférieur à 90°, le poinçon (320) comprend 2 autres parties latérales (323, 324) en liaison glissière avec une partie centrale formant un coin entre lesdites deux autres parties mobiles latérales, de sorte à réaliser une deuxième expansion latérale du piston (320) selon une direction (x) perpendiculaire à la direction d'expansion (291, 292) de la première expansion latérale.

## Patentansprüche

1. Verfahren zur Herstellung eines Verbundteils, das eine thermoplastische Polymermatrix umfasst und einen Kern (551) und mindestens zwei gebördelte Ränder (552, 553) aufweist, wobei mindestens einer der gebördelten Ränder in Bezug auf den Kern in einem Winkel (591, 592) von weniger als 90° ausgerichtet ist, wobei das Verfahren eine Werkzeugausrüstung verwendet, die Folgendes umfasst:
- einen Stempel mit einem Abdruck (110), der eine Öffnung, eine Eintrittsbreite (116), einen Boden (111) und Seitenwände (112) aufweist
- einen Stempel (120) mit einem Mittelteil (123) und mindestens zwei beweglichen Seitenteilen (121, 122, 321, 322, 323, 324), die gleitend mit dem Mittelteil (123) verbunden sind und ein Ende zwischen den Seitenteilen aufweisen und einen Keil zwischen den Seitenteilen bilden, Druckmittel (135) zwischen den beweglichen Seitenteilen und dem Mittelteil;
- Mittel zum Bewegen des Stempels (120) relativ zu der Matrize in einer Schlagrichtung (190);
- die so konfiguriert ist, dass eine Breite des Stempels (100) kleiner ist als die Eintrittsbreite (116) der Öffnung der Prägung und in der die Seitenteile in der Verschiebung in der Schlagrichtung (190) gegen den Boden (111) der Matrize angehalten werden, die Verschiebung des mittleren Teils (123) in dieser gleichen Richtung in Bezug auf die Seitenteile eine relative Verschiebung der Seitenteile in den Richtungen (291, 292) der seitlichen Ausdehnung des Stempels bewirkt, wobei eine Breite (200) des sich ausdehnenden Stempels gleich oder größer ist als die Eintrittsbreite (116) der Öffnung der Matrize;
- der keilförmige Mittelteil (123, 423) zwei Teile (123₁ , 123₂) und zwischen diesen beiden Teilen Mittel (127, 427₁ , 427₂ ) zum Einstellen einer Breite des Mittelteils in den Richtungen der seitlichen Ausdehnung umfasst;
i. das Verfahren umfasst die folgenden Schritte::
- Anpassen (610) des Stempels und der Matrize durch Einstellen der Mittel (127, 427₁ , 427₂ ) zum Einstellen der Breite des mittleren Teils des Stempels in Abhängigkeit von den Dicken des Kerns und der gebördelten Kanten des Teils;
- Erhalten (620) eines zusammengesetzten Rohlings, dessen Breite (616, 617) größer als die Breite (116) der Öffnung der Matrize ist;
- Erhitzen (630) des Verbundrohlings auf eine Temperatur, die gleich oder höher ist als die Schmelztemperatur der thermoplastischen Polymermatrix;
- Positionieren des Verbundwerkstoff-Rohlings über der Matrize des Werkzeugs und Stanzen (640) des Verbundwerkstoff-Rohlings (601) zwischen dem Stempel und dem Abdruck entlang eines Hubs in der Schlagrichtung (190), bis die seitlichen Teile einen Abstand von der Unterseite des Abdrucks erreichen, der einer Dicke der Bahn entspricht;
- den Hub des Stempels fortzusetzen, um die Seitenteile bis zu Abständen von den Seitenwänden der Prägung zu bewegen, die den Dicken der gebördelten Kanten entsprechen, und das Teil zu verdichten (645);
- Abkühlen des Teils unter Druck zwischen dem Stempel und dem Abdruck auf eine Temperatur, die niedriger ist als die Schmelztemperatur der Polymermatrix, um das Teil zu verfestigen (650);
- Bewegen des Stempels von der Matrize weg und Entformen (660) des Teils.

2. Verfahren nach Anspruch 1, bei dem das Teil 4 mit Flanschen versehene Kanten aufweist, wobei mindestens zwei der mit Flanschen versehenen Kanten in Bezug auf die Bahn in einem Winkel (591, 592) von weniger als 90° ausgerichtet sind, wobei der Stempel (320) zwei weitere seitlich bewegliche Abschnitte (323, 324) aufweist, die in gleitender Verbindung mit einem zentralen Abschnitt stehen, der einen Keil zwischen den beiden anderen seitlich beweglichen Abschnitten bildet, so dass eine zweite seitliche Ausdehnung des Stempels (320) in einer Richtung (x) senkrecht zur Ausdehnungsrichtung (291, 292) der ersten seitlichen Ausdehnung ermöglicht wird.

## Claims

1. A method for making a composite part comprising a thermoplastic polymer matrix and comprising a web (551) and at least two flanged edges (552, 553), at least one of the flanged edges being oriented with respect to the web at an angle (591, 592) of less than 90°, the method using a tooling comprising:
- a die comprising an imprint (110) comprising an opening, an entry width (116), a bottom (111) and side walls (112)
- a punch (120) comprising a central part (123) and at least two lateral movable parts (121, 122, 321, 322, 323, 324) in sliding connection with the central part (123) comprising an end between the lateral parts and forming a wedge between said lateral parts, pressure means (135) between the lateral movable parts and the central part;
- means for moving the punch (120) relative to the die in a striking direction (190);
- configured so that a width of the punch (100) is less than the entry width (116) of the opening of the imprint and in which the lateral parts are stopped in translation in the striking direction (190) against the bottom (111) of the die, the displacement of the central part (123) in this same direction relative to the lateral parts causes a relative displacement of the lateral parts in directions (291, 292) of lateral expansion of the punch, a width (200) of the expanding punch being equal to or greater than the entry width (116) of the opening of the die;
- the wedge-shaped central part (123, 423) comprising two parts (123₁, 123₂) and inbetween these two parts,, means (127, 427₁, 427₂) for adjusting a width of the central part in the directions of lateral expansion;
the method comprising the steps of:
- pairing (610) the punch and the die by adjusting the means (127, 427₁, 427₂) for adjusting the width of the central part of the punch according to the thicknesses of the core and the flanged edges of the part;
- obtaining (620) a composite blank whose width (616, 617) is greater than the width (116) of the opening of the die;
- heating (630) the composite blank at a temperature equal to or higher than a melting temperature of the thermoplastic polymer matrix;
- positioning the composite blank above the die of the tooling and stamping (640) the composite blank (601) between the punch and the imprint along a stroke in the striking direction (190) until the lateral parts reach a distance from the bottom of the imprint equal to a thickness of the web;
- continuing the stroke of the punch to move the lateral parts up to distances from the side walls of the imprint equal to the thicknesses of the flanged edges and compact (645) the part;
- cool down the part under pressure between the punch and the imprint to a temperature lower than the melting temperature of the polymer matrix to consolidate (650) the part;
- move the punch away from the die and unmold (660) the part.

2. The method of claim 1, wherein the part comprises 4 flanged edges with at least two flanged edges being oriented with respect to the web at an angle (591, 592) of less than 90°, the punch (320) comprises 2 other side movable portions (323, 324) in sliding connection with a central portion forming a wedge between said two other side movable portions, so as to enable a second lateral expansion of the punch (320) in a direction (x) perpendicular to the direction of expansion (291, 292) of the first lateral expansion.
